# EUROPEAN PATENT APPLICATION

(11) **EP 4 541 553 A1**
(43) Date of publication of application: **23.04.2025**
(21) Application number: 24206314.7
(22) Date of filing: 14.10.2024
(51) Int. Cl.: B29C 53/20, B29C 44/32, B29C 63/00, B29C 63/48, B29D 23/00, F16L 9/147

(54) **PROCESS FOR MANUFACTURING COPPER CONDUITS FOR AIR CONDITIONING SYSTEMS WITH IMPROVED ANTI-CORROSIVE PERFORMANCE**

(30) Priority: 16.10.2023 IT 202300021495
(71) Applicant: Ebrille S.r.l., 10123 Torino (IT)
(72) Inventor: MUSSO, Ezio, I-15060 CASTELLETTO D'ORBA (Alessandria) (IT)
(74) Representative: Aseglio-Gianinet, Romina

(57) **Abstract**

The present invention relates to a continuous process for producing an air conditioning conduit (10), comprising the steps of: unwinding a copper tube (12) from at least one coil (14) and straightening the tube; cleaning said copper tube (12) by plasma treatment; heating said copper tube (12) to complete the cleaning step; applying at least one adhesive on the outer surface of said copper tube (12); applying at least one polyamide anti-corrosion barrier layer over said adhesive; cooling the copper tube (12) coated with adhesive and polyamide anti-corrosion barrier layer; applying around the aforementioned copper tube (12) coated and cooled at least one insulation layer (28) made of closed-cell insulation material, thus obtaining the air conditioning conduit (10).

The process according to the present invention has the advantages of producing an air conditioning conduit (10) that effectively counteracts the phenomenon of "formicary corrosion."

## Description

### Field of the invention

The present invention relates to conduits used for air conditioning systems, in particular those used to connect the external unit to the internal unit of conditioning systems

### Prior art

As a result of recent climate changes, the use of these systems has become significantly widespread in recent years with the aim of improving the living comfort in home and work environments.

According to the prior art, such conduits consist of a copper tube-a material that has proven particularly advantageous for this application-externally coated with an insulating layer of insulation.

In particular, air conditioning copper tubes are produced according to the reference standards provided by the standard EN 12735/1 for the European market and by the standard ASTM B 280 for the North American market, which specify the chemical, mechanical, geometric, and internal cleaning features to which they must be subjected.

The copper tubes typically used are annealed tubes to ensure easy application and have diameters between 1/4" and 1-1/8".

The copper tubes are insulated by applying an outer insulation layer of closed-cell expanded organic material, for example expanded polyethylene or expanded elastomer, which are the types currently most used in the sector.

The insulation operation is achieved by means of plants that are well known to the person skilled in the art, which supply pre-insulated copper tube rolls of the desired length. However, in recent years, in the use of such conduits, phenomena of copper corrosion have frequently occurred, with the resulting loss of the coolant fluid flowing therein.

These phenomena are to be attributed to the so-called "formicary corrosion" (or "ant nest corrosion"), a particular corrosion phenomenon that affects the outer surface of the tubes and causes the premature deterioration thereof.

The corrosion reaction takes place when wet, either in a liquid phase or in a vapor phase, and concerns the outer surface of the conduits. It is known that the development of such a reaction requires the simultaneous presence of moisture, oxygen, and an aggressive agent, generally an organic acid with few carbon atoms, such as formic, acetic, propionic, or butyric acid, or other volatile organic substances, such as alcohols or aldehydes that may generate the organic acids indicated above during the use of the conduit.

Approximately 10% of coolant leaks in the HVAC (heating, ventilation, and air conditioning) sector are caused by "formicary corrosion" phenomena.

Depending on the operating conditions of the air conditioning system and the installation site, the corrosive phenomenon may lead to the loss of coolant fluid over a period of time between a few months to a few years after commissioning.

In this regard, it is known that, in the absence of water, the corrosion reaction does not occur, while some ions, such as the chloride ion and the sulfate ion, often present in the surrounding environment, accelerate this reaction, the speed of which increases as the temperature increases.

Particularly damaging is the presence in the environment of organic acids due to photochemical processes and anthropogenic emissions which, following the condensation of moisture on the cold surface of the tubes, are concentrated in the aqueous phase generating the corrosion phenomenon.

In general, manufacturers of air conditioning systems and manufacturers of pre-insulated conduits have proposed to follow strict installation criteria in order to avoid the phenomenon of "formicary corrosion"; however, these criteria may not always be met due to the difficulties related to the specific situations of the location where the system was installed.

The basic approach underlying these criteria is to avoid the entry of moisture/condensation into the gap between the copper tube and the insulation, hermetically sealing the ends of the conduits connected to the connections of the air conditioning units and avoiding any discontinuity of the insulation layer along the conduit.

In this way, the stagnation of water containing corrosive agents is avoided, this stagnation causing the phenomenon of "formicary corrosion," the development of which is particularly accelerated in wet environments close to the sea and therefore rich in chloride ions.

It has also been observed that when the reaction is triggered, it proceeds without stopping by means of an auto-catalytic mechanism that does not consume the corroding agents.

Instead, to stop the reaction, all the water already present on the conduit must be removed and other water must be prevented from entering.

The causes and modes for developing "formicary corrosion" are therefore well known.

However, this phenomenon is a function of numerous contributions, the main cause either being external and related to the environment as indicated above, or endogenous to the conduit due to the presence of traces of organic acids present in the insulation on the surface of the copper tube following the manufacturing process thereof, and it has so far proven to be rather difficult to effectively counteract it by means of reliable manufacturing processes that ensure an adequate protective layer.

The need is therefore felt on the market for the possibility of having a process for the production of an air conditioning conduit, and therefore an air conditioning conduit thus obtained, which allows the phenomenon of "formicary corrosion" in said conduits to be effectively counteracted by means of a simple process, which ensures reliability and high manufacturing speed and which is therefore economically and technically sustainable.

### Summary of the invention

The object of the present invention is therefore to provide a process for producing an air conditioning conduit, and therefore an air conditioning conduit thus obtained, that allows the phenomenon of "formicary corrosion" in said conduits to be effectively counteracted by means of a simple process which ensures reliability, high manufacturing speed, and is economically and technically sustainable.

This object is achieved by a process and by an air conditioning conduit obtained by means of said process as delineated in the accompanying claims, of which the definitions form an integral part of the present description.

### Brief description of the figures

The invention will be better understood from the following detailed description of preferred embodiments thereof, given by way of non-limiting example and with reference to the accompanying figures, in which:
- Fig. 1 shows a plant for carrying out the process according to the present invention, i.e. the production of the air conditioning conduit according to the present invention;
- Fig. 2 shows a detail of Fig. 1, in particular extruders for applying on the external surface of said copper tube at least one adhesive and for applying at least one polyamide anti-corrosion barrier layer;
- Fig. 3 shows at the top a copper tube not coated with adhesive and a polyamide anti-corrosion barrier layer and at the bottom a conduit according to the present invention before the ASTM B 368 accelerated test of Example 3;
- Fig. 4 shows at the top a copper tube not coated with adhesive and a polyamide anti-corrosion barrier layer and at the bottom a conduit according to the present invention after 50 hours of treatment of Example 3;
- Fig. 5 shows at the top a copper tube not coated with adhesive and a polyamide anti-corrosion barrier layer and at the bottom a conduit according to the present invention after 500 hours of treatment of Example 3;
- Fig. 6 shows the tube and the conduit of Fig. 5 wherein most of the insulation layer has been removed;
- Fig. 7 shows the conduit according to the present invention, without the insulation layer, wherein the adhesive and the polyamide anti-corrosion barrier layer have been partially removed from the outer surface of the copper tube.

In the accompanying figures, identical or similar elements are denoted by the same reference signs.

### Detailed description of the invention

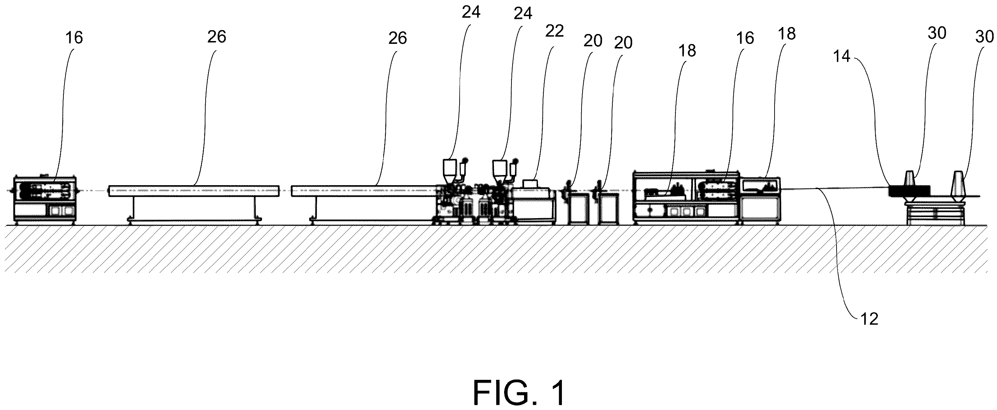

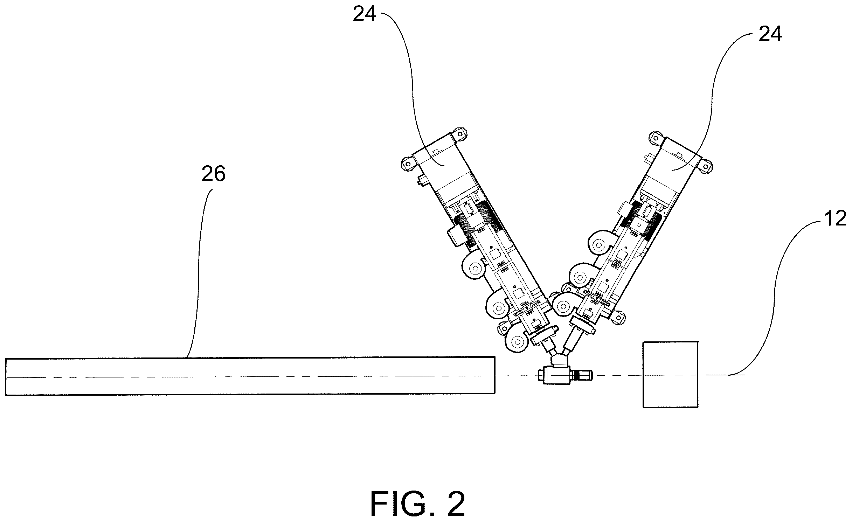

With reference to Fig. 1 and 2, a first subject matter of the present invention is shown, namely a continuous process for producing an air conditioning conduit 10, comprising the steps of:
- unwinding a copper tube 12 from at least one coil 14 and straightening the tube; preferably the unwinding takes place both by means of a pulling device 16 and by means of a device for unwinding 30 the coil 14, and the straightening takes place by means of a straightening device 18;
- cleaning said copper tube 12 by plasma treatment; preferably the plasma treatment is carried out by at least one plasma torch 20;
- heating said copper tube 12 to complete the cleaning step; preferably, the heating takes place by means of a heating furnace 22; even more preferably by means of a magnetic induction heating furnace;
- applying at least one adhesive to the outer surface of said copper tube 12; preferably the application is by means of an extruder 24;
- applying at least one polyamide anti-corrosion barrier layer to said adhesive; preferably the application is made by means of an extruder 24;
- cooling the copper tube 12 coated with adhesive and polyamide anti-corrosion barrier layer; preferably the cooling occurs by means of at least one cooling zone 26;
- applying around the aforementioned coated and cooled copper tube 12 at least one insulation layer 28 made of closed-cell insulation material, thus obtaining the air conditioning conduit 10.

The step of
- unwinding a copper tube 12 from at least one coil 14 and straightening the tube preferably comprises the sub-steps of:
   - unwinding a copper tube 12 from at least one coil 14 of appropriate length, by pulling said coil;
   - straightening to bring the copper tube 12 back in line;
   - pulling the copper tube 12;
   - further straightening the copper tube.

According to a preferred embodiment of the process according to the present invention, the at least one adhesive is preferably a homopolymer polyolefin or a copolymer functionalized with maleic anhydride. Preferably, the homopolymer polyolefin or copolymer is selected from: polyethylene, medium-density polyethylene copolymer, high-density polyethylene, linear low-density polyethylene, comonomer of C₄-C₈, or mixtures thereof.

According to a preferred embodiment of the process according to the present invention, the at least one polyamide anti-corrosion barrier layer is a polyamide 12 anti-corrosion barrier layer 12. As known to the person skilled in the art, polyamide 12 means poly[imino(1-oxododecan-1,12-diyl)] having the formula (CH₂)₁₁C(O)NH)ₙ.

According to a preferred embodiment of the process according to the present invention, the at least one adhesive and/or the at least one polyamide anti-corrosion barrier layer preferably further comprise at least one additive.

Preferably, the additive of the at least one adhesive is selected from: antioxidant, thermal stabilizer, chemical stabilizer for contact with the copper tube 12, and mixtures thereof. Preferably, the concentration range by weight of the aforesaid additive of the at least one adhesive is comprised between 0.1% by weight and 5% by weight (% expressed with respect to the total weight of the adhesive), even more preferably between 0.5% by weight and 2% by weight (% expressed with respect to the total weight of the adhesive).

Preferably the additive of the at least one polyamide anti-corrosion barrier layer is selected from: antioxidant, thermal stabilizer, UV stabilizer, dye, lubricant, or mixtures thereof. Preferably, the concentration range by weight of the barrier layer additive is comprised between 0.1% by weight and 5% by weight, even more preferably between 0.5% by weight and 3% by weight, the % being expressed with respect to the total weight of the polyamide composition.

According to a preferred embodiment of the process according to the present invention, the step of
- applying at least one adhesive to the outer surface of said copper tube 12 and the step of
- applying at least one polyamide anti-corrosion barrier layer over said adhesive preferably occur by simultaneously applying the adhesive and the polyamide anti-corrosion barrier layer.

According to a preferred embodiment of the process according to the present invention, the cleaning step by plasma treatment preferably takes place at a capacity comprised between 2000 VA and 3000 VA (preferably 2500 VA) and at a frequency comprised between 20 kHz and 35 kHz (preferably between 25 kHz and 30 kHz).

According to a preferred embodiment of the process according to the present invention, the heating step preferably takes place at a temperature comprised between 120°C and 300°C, preferably between 150°C and 250°C, even more preferably at 210°C.

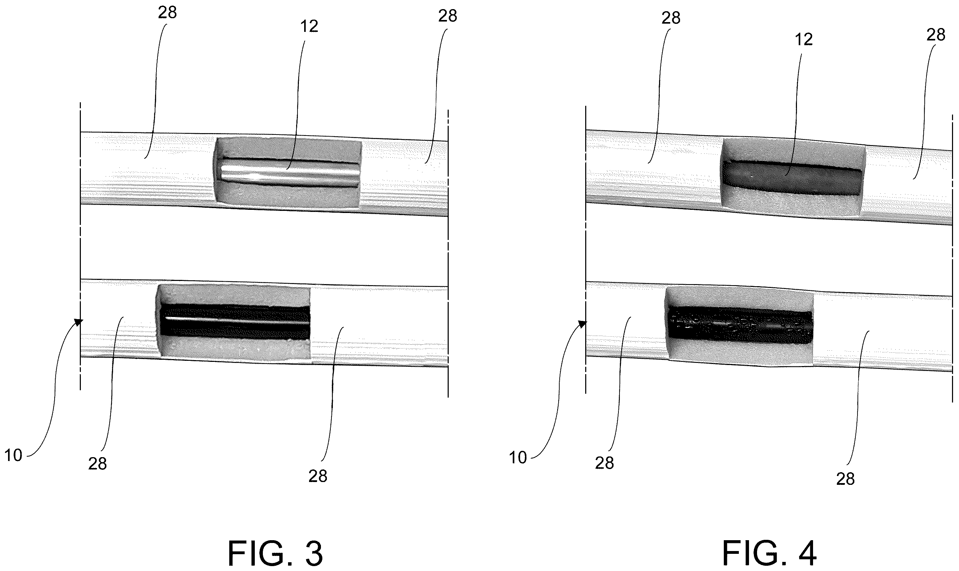

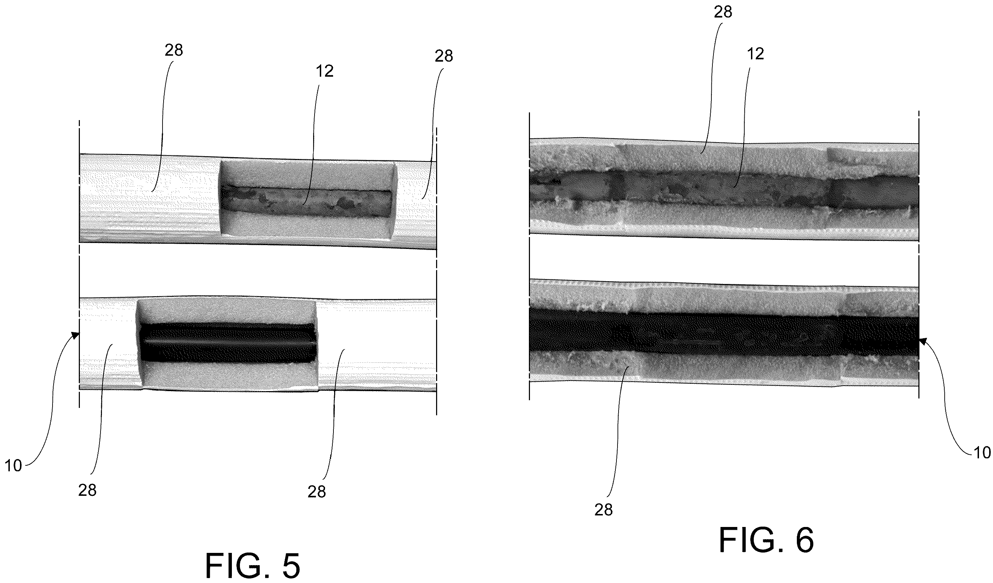

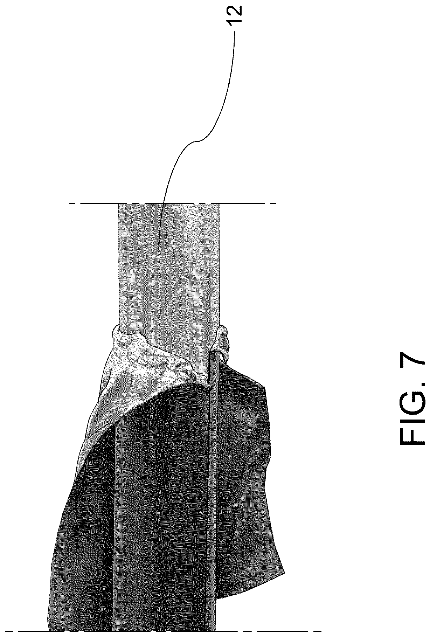

With reference to Fig. 3 to 7, a second subject matter of the present invention is shown, namely an air conditioning conduit 10 obtainable by carrying out a process as described above, comprising a copper tube 12 coated with at least one adhesive, at least one polyamide anti-corrosion barrier layer, and at least one insulation layer 28 made of closed-cell insulation material.

According to a preferred embodiment of the conduit 10 according to the present invention, said copper tube 12 preferably has an outer diameter comprised between 6.35 mm and 28.60 mm, said adhesive has a thickness preferably comprised between 0.025 mm and 0.080 mm, said polyamide anti-corrosion barrier layer preferably has a thickness comprised between 0.10 mm and 0.60 mm, and said insulation layer 28 made of closed-cell insulation material has a thickness preferably comprised between 6 mm and 25 mm.

The following is a preferred but non-limiting detailed description of the process and of the conduit 10 according to the present invention.
- Step of unwinding a copper tube 12 from at least one coil 14: the step of unwinding a copper tube 12 is preferably conducted by unwinding at least one coil 14 preferably by using an unwinding device 30 for a copper coil 14. Preferably, said unwinding device 30 comprises a double rotating table capable of ensuring the unwinding of the copper coil 14 subjected to pulling by the pulling device 16, the two tables, not motorized, allow the continuity of supply of the copper tube 12, so as to make it easier to feed the copper tube 12. Preferably, the coils 14 are placed alternately on one of the two tables: when the first coil 14 ends, continuity is ensured by mechanical joining of the final part of the first coil 14 with the initial part of the second coil 14 present on the other unwinding table.
- Step of straightening the copper tube 12: preferably, the straightening takes place through the use of a straightening device 18 comprising a group of opposing non-motorized vertical and horizontal wheels, with a central groove which has the purpose of containing the copper tube 12 and bringing it back in line. The groove has a size slightly greater than the outer diameter of the copper tube 12, in order to ensure the proper straightening thereof.
- pulling the copper tube 12 and the (further) straightening thereof: preferably, the pulling is accomplished through the use of a pulling device 16 comprising steel sheets where the seats for the pulling tracks are located. The rubber tracks, both pulling, consist of a flat belt that slides on a system of rollers managed by two electric gearmotors. The pulling device 16 and the straightening device 18 are able to provide for the movement of the copper tube 12 in synchronism with a second pulling device 16 placed in the final part of the line. Preferably, adjacent to the pulling device 16 there is a further straightening device 18; it consists, in a manner similar to the initial one, of a group of opposing non-motorized vertical and horizontal wheels. Advantageously, the aim is to improve the straightening of the copper tube 12 in order to ensure the proper application thereon of subsequent layers (adhesive, polyamide anti-corrosion barrier layer, and insulation layer).
- Step of cleaning the copper tube 12 by means of plasma treatment: preferably, the plasma treatment takes place through the use of at least one plasma torch 20 capable of generating free ions and radicals, by applying an electric field at high voltage in the air at atmospheric pressure and at room temperature. Preferably, the resulting ionized air flow is delivered onto the surface of the copper tube 12 set in motion by the pulling device 16. In Fig. 1 two plasma torches 20 are shown, but depending on the cross section of the copper tube 12 they may also be greater in number. Preferably, the flow brushes the surface of the copper tube 12 and must concern the entire outer area of the tube 12. Advantageously, the plasma treatment allows for the preliminary cleaning of the copper tube 12 which generally has traces of drawing oils and impurities of organic origin.
- Copper tube heating step 12: preferably, the heating step takes place through the use of a heating furnace 22, even more preferably through a magnetic induction heating furnace 22. As is known, the production of heat by inductive technology is based on the application of a variable magnetic field to a ferromagnetic material, which in turn generates eddy currents on the surface of the electro-conductive material to be heated. Preferably, the copper tube 12 passes through a magnetic induction tunnel and undergoes rapid heating by the Joule effect, with temperatures of about 200°C at a production speed of between 20 m/min and 30 m/min. Preferably and advantageously, the induction heating furnace 22 makes it possible to reach, in a short time (dwell time in the furnace), the temperature necessary for the removal, by evaporation, of the remaining residues of drawing oils, and brings the surface of the copper tube 12 to a temperature suitable for applying the adhesive.
- Step of applying at least one adhesive and at least one polyamide (preferably polyamide 12) anti-corrosion barrier layer to the external surface of the copper tube 12: preferably the step of applying the adhesive and the barrier layer is performed through the use of an extruder 24, preferably through two extruders 24 by means of which it is possible to apply the adhesive and polyamide layer. Preferably, the application takes place using an annular co-extrusion head, i.e., which allows the simultaneous application of the two layers in order to ensure better adhesion thereof.

- Cooling step of the copper tube 12 coated with adhesive and polyamide anti-corrosion barrier layer: preferably, the cooling step is carried out in a cooling zone 26 comprising two steel sheet ducts wherein refrigerated water is atomized on the coated tube passing through the zone, with the aim of reducing the temperature from about 200°C to about 50°C.
- Additional pulling device 16: preferably, in a manner similar to the main pulling device 16, it comprises a steel sheet structure with adequate cylindrical supports for the pulling tracks. Preferably, the main supports are motorized in order to ensure the proper rotation of the tracks which, in synchronism with the main pulling device 16, provide for moving the tube (both pre- and post-coating) from the coating zone thereof towards the final insulation section.

Advantageously, the process according to the present invention allows the layers (adhesive and anti-corrosion barrier) to be applied at a speed preferably between 15 m/min and 30 m/min, depending on the diameter of the copper tube 12 to be coated, ensuring processing stability with proper polyamide thicknesses (preferably polyamide 12).

Preferably, the thicknesses of the two layers (adhesive and anti-corrosion barrier) are shown in Table 1 below:

**Table 1: Preferred thicknesses of the two layers (adhesive and anti-corrosion barrier)**

| **Material of each layer:** | **Layer thickness, mm** | **Preferable thickness, mm** | **Tolerances, over the total thickness (A+PA12), mm** |
|---|---|---|---|
| Adhesive (A) | 0.08-0.025 | 0.08-0.013 | 0.05 |
| Polyamide 12 (PA 12) | 0.10-0.60 | 0.10-0.30 | |

With particular reference to the at least one adhesive used in the present invention, said adhesive is preferably a homopolymer polyolefin or a copolymer functionalized with maleic anhydride, preferably with a softening temperature value (A) ≥ 100°C. Preferably, the polymers used as a basis for obtaining the adhesive to be used in the present invention are selected from: polyethylene or MDPE (medium-density polyethylene), HDPE (high-density polyethylene) copolymer, and LLDPE-type (low-density linear polyethylene) or mixtures thereof. Preferably, the comonomers used to obtain the aforesaid polymer base are selected from C4-C8.

According to a preferred embodiment of the process according to the present invention, the adhesive may preferably further comprise some additives preferably selected from: antioxidant, thermal stabilizer, chemical stabilizer for contact with the copper tube, and mixtures thereof. Preferably, the concentration range by weight of the additive, if contained in the adhesive, may vary from 0.1% to 5%, preferably from 0.5% to 2% by weight, the % being expressed with respect to the total weight of the adhesive.

According to a preferred embodiment of the process according to the present invention, the polyamide anti-corrosion barrier layer which provides chemical and physical protection against organic acids (in particular formic acid and acetic acid) is preferably made of Polyamide 12. Preferably, the melting temperature of the anti-corrosion barrier layer must be higher than that of the adhesive and in any case ≥ 175°C.

According to a preferred embodiment of the process according to the present invention, the polyamide used according to the present invention may also preferably comprise one or more additives selected from: antioxidant, thermal stabilizer, UV stabilizer, dye, lubricant, or mixtures thereof. Preferably, the concentration range by weight of the additive of the anti-corrosion barrier layer is comprised between 0.1% by weight and 5% by weight, even more preferably between 0.5% by weight and 3% by weight, the % being expressed with respect to the total weight of the polyamide composition.

Preferably and advantageously, the polyamide layer (preferably polyamide 12 - PA 12) has good mechanical, chemical, and heat resistance and offers significant corrosion resistance towards organic acids, such as formic acid and acetic acid; in particular the layer demonstrates adequate adhesion to the surface of the copper tube 12.

### Examples

Some preferred exemplary embodiments of the present invention are now provided, given by way of non-limiting example.

### Example 1: the adhesive.

The adhesive is a linear ethylene-octene copolymer polyethylene (C8- LLDPE), functionalized with maleic anhydride (MAH), the features of which are shown in Table 2 below:

**Table 2: Properties of C8-LLDPE.**

| **Chemical-physical properties** | **Value** | **Unit of measurement** | **Method** |
|---|---|---|---|
| Melt flow index (MFI) 190°C-2.16 kg | 3.0 | g/10 min. | ISO 1133 |
| Melting temperature | 124 | °C | ISO 11357-1/3 |
| Softening temperature, A | 100 | °C | ISO 306 |
| Density | 928 | Kg/m³ | ISO 1183 |

This adhesive advantageously offers high productivity, constant workability in terms of flow stability, good adhesion quality even at high temperatures, and excellent long-term (thermal) stability.

### Example 2: the polyamide anti-corrosion barrier layer and an example of the process.

The following polyamide 12 was used as the barrier layer, the main features of which are shown in Table 3 below:

**Table 3: Properties of the polyamide 12.**

| **Chemical-physical properties** | **Value** | **Unit of measurement** | **Method** |
|---|---|---|---|
| Melting temperature | 178 | °C | ISO 11357-1/3 |
| Maximum working temperature | 90-100 | °C | ISO 2578 |
| Peak temperature | 150 | °C | ISO 2578 |
| Coloring (presence of carbon black) | 2.0 | % | - |
| Density | 1010 | Kg/m³ | ISO 1183 |

The following Table 4 instead shows an example of process conditions according to the present invention:

**Table 4: Process conditions.**

| **Parameters** | **Value** | **Unit of measurement** |
|---|---|---|
| Diameter of copper tube subjected to coating | 15.88 (5/8") | mm (inch) |
| Plant speed | 22 | meters/minute |
| Plasma operating conditions: | | |
| Capacity | 2500 | VA |
| frequency | 25-30 | kHz |
| Temperature of copper tube after induction furnace | 210 | °C |
| Total coating thickness (adhesive + PA layer 12) | 350 | µm (average value) |
| Adhesion of the coating on copper tube | good | - |

### Example 3: Corrosion protection assessment

Referring to Fig. 3 to 6, the conduit 10 produced according to Table 4 and an analogous comparison copper tube without protective coating (adhesive and polyamide anti-corrosion barrier layer) were subjected to the ASTM B 368 test *"Standard Test Method for Copper-Accelerated Acetic Acid-Salt Spray (Fog) Testing (CASS Test)".*

The aforesaid test provides for the use of a saline solution of 5% by weight of NaCl, with an acid pH between 3.1 and 3.3 obtained by the addition of acetic acid, at a temperature of 49°C ± 1°C for 500 hours.

Such a test, although not specifically designed to ascertain resistance to "formicary corrosion", is still suitable for the purpose, since acetic acid is a major contributor to the corrosion phenomenon, and the chloride ion accelerates the reaction.

In order to reproduce the actual installation conditions, both the conduit 10 according to the present invention and the comparison copper tube were insulated with the polyethylene insulation intended for the US market (insulation layer thickness 13 mm); a discontinuity is also obtained in the insulation layer to simulate contact with the external environment (humid and with the presence of acetic acid) as an aggressive element responsible for the corrosion.

From Fig. 3 to 6 it is possible to observe how the presence of the coating layer of adhesive + polyamide anti-corrosion barrier layer protects the copper tube 12 from corrosion, corrosion which is instead markedly evident in the copper tube without the aforesaid protective layer. This therefore demonstrates that the conduit 10 according to the present invention, by virtue of the presence of the coating layer comprising the adhesive and polyamide anti-corrosion barrier layer, prevents the corrosion of the copper tube and therefore effectively counteracts the phenomenon of "formicary corrosion" in said conduits by means of a simple production process which ensures reliability and high manufacturing speed with low costs and sustainable techniques.

## Claims

1. Continuous process for producing an air conditioning conduit (10), comprising the steps of:
- unwinding a copper tube (12) from at least one coil (14) and straightening the tube;
- cleaning said copper tube (12) by plasma treatment;
- heating said copper tube (12) to complete the cleaning step;
- applying at least one adhesive on the outer surface of said copper tube (12);
- applying at least one polyamide anti-corrosion barrier layer over the adhesive;
- cooling said copper tube (12) coated with adhesive and polyamide anti-corrosion barrier layer;
- applying around the aforementioned coated and cooled copper tube (12) at least one insulation layer (28) made of closed-cell insulation material, thus obtaining the air conditioning conduit (10).

2. Process according to claim 1, wherein the at least one adhesive is a homopolymer polyolefin or copolymer functionalized with maleic anhydride.

3. Process according to claim 2, wherein the homopolymer polyolefin or copolymer is selected from: polyethylene, medium-density polyethylene copolymer, high-density polyethylene, linear low-density polyethylene, comonomer of C₄-C₈, or mixtures thereof.

4. Process according to any one of claims 1 to 3, wherein the at least one polyamide anti-corrosion barrier layer is a polyamide 12 anti-corrosion barrier layer.

5. Process according to any one of claims 1 to 4, wherein the at least one adhesive and/or the at least one polyamide anti-corrosion barrier layer further comprise at least one additive.

6. Process according to any one of claims 1 to 5, wherein the step of
- applying at least one adhesive on the outer surface of said copper tube (12);
and the step of
- applying at least one polyamide anti-corrosion barrier layer over the adhesive
occur simultaneously, by simultaneously applying the adhesive and the polyamide anti-corrosion barrier layer.

7. Process according to any one of claims 1 to 6, wherein the cleaning step by plasma treatment takes place at a capacity comprised between 2000 VA and 3000 VA and at a frequency comprised between 20 kHz and 35 kHz.

8. Process according to any one of claims 1 to 7, wherein the heating step takes place at a temperature comprised between 120°C and 300°C, preferably between 150°C and 250°C.

9. Air conditioning conduit (10) obtainable by carrying out a process according to any one of claims 1 to 8, comprising a copper tube (12) coated with at least one adhesive, at least one polyamide anti-corrosion barrier layer, and at least one insulation layer (28) of closed-cell insulation material.

10. Conduit (10) according to claim 9, wherein said copper tube (12) has an outer diameter comprised between 6.35 mm and 28.60 mm, said adhesive has a thickness comprised between 0.025 mm and 0.080 mm, said polyamide anti-corrosion barrier layer has a thickness comprised between 0.10 mm and 0.60 mm, and said insulation layer (28) of closed-cell insulation material has a thickness comprised between 6 mm and 25 mm.
